# EUROPEAN PATENT SPECIFICATION

(11) **EP 3 945 152 B1**
(45) Date of publication and mention of the grant of the patent: **30.08.2023**
(21) Application number: 21186213.1
(22) Date of filing: 16.07.2021
(51) Int. Cl.: D06F 37/02

(54) **LAUNDRY DRUM INSULATION**
ISOLIERUNG EINER WÄSCHETROMMEL
ISOLATION DE TAMBOUR DE LAVAGE

(30) Priority: 29.07.2020 US 202016941692
(43) Date of publication of application: 02.02.2022
(73) Proprietor: Whirlpool Corporation, Benton Harbor, MI 49022 (US)
(72) Inventor: Borgerson, Matthew E., 21024 Cassinetta di Biandronno (VA) (IT)
(74) Representative: Spina, Alessandro

(56) References cited:
- EP-A2- 1 541 741
- WO-A1-2004/005604
- JP-A- H02 295 592
- US-A1- 2014 230 497

## Description

### TECHNICAL FIELD

The present application is directed to a laundry appliance, and more particularly, to insulation materials or composites applied to the drum of the laundry appliance.

### BACKGROUND

Laundry appliances, such as clothes washers, dryers, refreshers, and non-aqueous systems, may include a rotating drum (or basket) for receiving items to be laundered. The drum is housed in an appliance body, where the body has a door for providing access to the drum. The drum is rotated by a motor, to tumble the clothing items within the drum. The laundry appliance may include a controller that operates the laundry appliance based on a user-input selection of numerous pre-programmed cycles. Each pre-programmed cycle may have various adjustable parameters (*e.g.,* time, temperature, etc.) which can be adjusted by the user. Upon loading of laundry items in the drum, and selection of the pre-programmed cycle (and any adjustments therein), the laundry appliance operates to treat the laundry items based on the type of appliance *(i.e.,* a washer runs the selected wash cycle, the dryer runs the selected dry cycle, etc.). In conventional washers, the drum (or sometimes referred to as basket) may have opening(s) for providing water *(i.e.,* heated or unheated water) to the drum to wash the clothing items. In conventional dryers, the drum may have a vent or opening(s) for providing air *(i.e.,* dry, heated or unheated air) to dry the clothing items. The drum is typically made of metal, such as, but not limited to, coated steel or stainless steel.
Document JP H02 295592 A discloses an electric washing machine having an outer tub and outer frame structure effective for reducing noise.
Document EP 1 541 741 A2 discloses a laundry dryer having a noise reduction member mounted on an outer circumference of the dryer drum to absorb vibration/noise.

### SUMMARY

According to one or more embodiments, a laundry appliance includes a cylindrical drum including a drum wall defining a receptacle for receiving laundry items. The drum wall includes a curved portion and a rear wall portion defining an outer surface which is susceptible to heat loss. The laundry appliance further includes an insulation composite secured to at least a portion of the outer surface to reduce the heat loss from the drum. The insulation composite includes a polyester material and an air barrier layer, with the polyester material being sandwiched between the drum wall and the air barrier layer.

According to at least one embodiment, the insulation composite may include a plurality of layers of the polyester material sandwiched between the drum wall and the air barrier layer. In certain embodiments, the air barrier layer may be a metal foil or sheet. In at least one embodiment, the polyester material may be a polyester felt. In one or more embodiments, the polyester material may have a thickness of about 1 to 5 mm. In certain embodiments, the polyester material has a surface density of about 50 to 1000 g/m². In at least one embodiment, at least 20% of the outer surface may include the insulation composite. In certain embodiments, at least 20% of the curved portion includes the insulation composite.

According to one or more embodiments, an insulation composite for a laundry appliance includes a polyester material having a first side for securing the polyester material to a laundry drum, and a second side opposite the first side, and an air barrier layer attached to the second side and being substantially impermeable to air. The air barrier layer traps heated air within the polyester material and between an outer surface of the laundry drum and the air barrier layer to reduce the heat loss from the drum.

According to at least one embodiment, the air barrier layer may have a thickness of about barrier layer has a thickness of about 25 to 1000 µm, and the polyester material may have a thickness of about 1 to 5 mm. In one or more embodiments, the polyester material may include a plurality of layers of polyester sheets. In certain embodiments, the polyester material may be a polyester felt, and the air barrier layer may be a metal foil or sheet. In further embodiments, the metal foil or sheet may be aluminum, tin, stainless steel, or steel. In at least one embodiment, a thermal conductivity of the polyester material may be about 0.02 to 0.06 W/(m-K).

According to one or more embodiments, a method of providing a laundry appliance includes providing a drum having a receptacle for receiving laundry items, the drum being configured to be mounted within an appliance body having a door providing access to the receptacle; and attaching a polyester material to at least a portion of an outer surface of the drum. The polyester material is positioned on the outer surface to reduce convective heat loss from the drum.

According to at least one embodiment, the polyester material may include an air barrier layer secured on an opposite side of the polyester material from the outer surface. In further embodiments, the polyester material may be a polyester felt and the air barrier layer may be a metal foil or sheet. In some embodiments, the polyester material may have a thickness of about 1 to 5 mm, and the air barrier layer may have a thickness of about 25 to 1000 µm. In one or more embodiments, the method may further comprise attaching an air barrier layer on an opposite side of the polyester material from the outer surface after attaching the polyester material to the outer surface. In other embodiments, the method may further comprise attaching an air barrier layer to the polyester material on an opposite side of the polyester material from the outer surface prior to securing the polyester material to the outer surface.

### BRIEF DESCRIPTION OF THE DRAWINGS

FIG. 1 is a perspective view of a laundry appliance, according to an embodiment;
FIG. 2 is a perspective view of the drum and components of the laundry appliance, according to an embodiment;
FIG. 3A is a cross section of the laundry appliance of FIG. 1, taken along A-A ;
FIG. 3B is an enlarged partial schematic illustration of the drum insulation, according to the embodiment of FIG. 3A;
FIG. 4A is a flow chart depicting a method of providing a laundry appliance, according to another embodiment; and
FIG. 4B is a flow chart depicting a method of providing a laundry appliance, according to another embodiment.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Laundry appliances, such as washers and dryers, are often used together to wash and dry clothing, linens, towels, and other items, collectively "laundry items." Washers are appliances that use water, along with detergent, to clean the items under agitation (*e.g.,* rotation). After washing, the wet laundry items are transferred to the dryer. Dryers use air to remove moisture from the clean laundry items which came from the washer, or from other damp or wet laundry items. Dryers include an air supply and an exhaust for supplying air to a drum to aid in the drying of the laundry items within the drum of the laundry appliance. In various examples, the air enters the body of the dryer, passes over a heating element to warm the air, and the warm air is provided into the drum (sometimes referred to as a tumbler). The air circulates through the drum as the drum is rotated, such that the laundry items are dried. The air then exits the drum through an exhaust duct, which may include a lint screen to remove lint or other debris from the airflow. The air flow through the dryer is supplied and aided by a blower system to force the air out the dryer and pull new air in to be heated.

In certain examples, the drum of the laundry appliance may be made of stainless steel. Stainless steel may be used for the drum in certain appliances, such as washers and dryers, to impart advantageous properties, including resistance to rust and stains, and no need for a protective coating. In other examples, the drum may be made of porcelain-coated steel, which can be produced at a reduced cost relative to stainless. When compared with other metals, such as copper or aluminum, steel is a relatively poor conductor of heat. Nevertheless, the drum of the laundry appliance may be susceptible to conductive heat loss through the drum wall. Additionally, convective heat loss may occur due to the presence of air on the outer surface of the drum wall. These heat loss factors may affect the overall efficiency of the laundry appliance, as additional energy is used by the dryer not only to generate more heat for the air, but to blow more air into the drum to dry the laundry items, in order to counter heat lost through the drum. Thus, according to one or more embodiments, features and methods for reducing heat loss from the drum are disclosed.

According to one or more embodiments, a laundry appliance having drum insulation on the outside surface of the wall of the drum is provided. The drum insulation includes a polyester material (*e.g.,* polyester felt) and an air barrier layer (*e.g.,* aluminum sheet), cooperating to form an insulation composite. The presence of the polyester material may reduce the conductive heat loss through the drum, and the air barrier layer prevents air from flowing away from the polyester material, and therefore, the drum wall, effectively sealing heated air from going past the air barrier layer. The polyester material is secured to at least a portion of the drum wall, and is sandwiched between the drum wall and the air barrier layer. The drum insulation, in certain embodiments, includes the fibrous polyester felt and the aluminum sheet to reduce convective heat loss by reducing the drum wall's exposure to air. Also described are methods of applying the drum insulation to the wall of the drum.

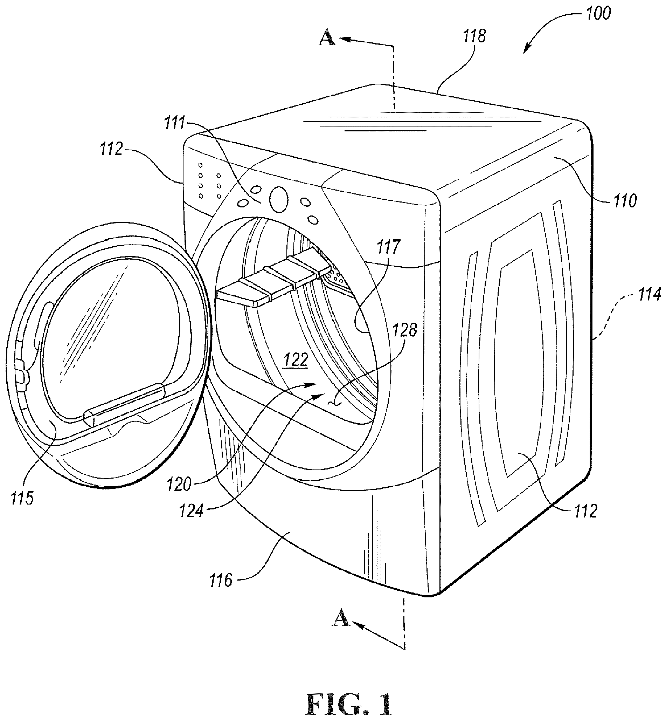

Referring to FIG. 1, a laundry appliance 100 is shown according to an embodiment. A dryer is shown and described herein, and according to the invention the features described herein are applicable to dryers. As such, laundry appliance and dryer may be used interchangeably. The laundry appliance 100 includes an outer appliance body 110 defining the outer cabinet structure of the laundry appliance 100. The body 110 is constructed of side walls 112, rear wall 114, front surface 116, and top surface 118. The body 110 further includes a control panel 111. Although shown on the front surface 116 in FIG. 1, the control panel 111 may be located in any convenient position such that a user can select the operation cycles of the laundry appliance (*e.g.,* on top surface 118 or on a flange extending from the top surface 118 or the front surface 116). The laundry appliance 100 further includes a door 115 for providing access inside the cavity defined by the body 110 via an opening 117 in the front surface 116. The door 115 may be hinged and mounted to the front surface 116, such that it can be engaged with the body 110 to seal the cavity at the opening 117. The laundry appliance 100 further includes a drum 120 for receiving laundry items (*e.g.,* clothing, towels, linens, and the like) in the cavity of the body 110, although not visible in FIG. 1. In certain embodiments not belonging to the invention where the laundry appliance 100 is a washer, the drum 120 may be interchangeable with the term basket. The drum 120 defines an interior receptacle 122 where the laundry items are placed, with the receptacle 122 being accessible via the opening 117, such that a user can open the door 115 to place the laundry items within the receptacle 122. When the door 115 is closed, the interior receptacle 122 is sealed from the external environment by the door 115 to reduce leaks (*e.g.,* air or water) from the opening 117 during a laundry cycle. A portion of the door 115 may be sufficiently transparent such that the laundry items within the receptacle 122 can be seen through the door 115.

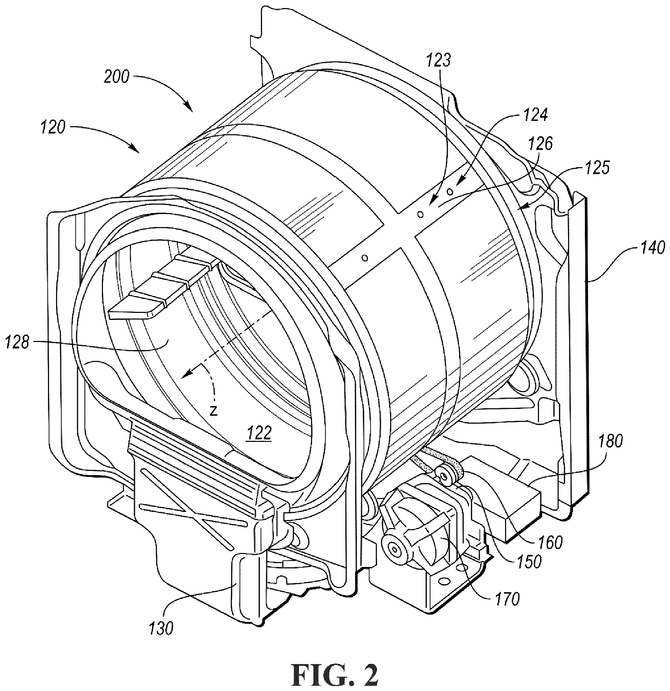

Referring to FIG. 2, the laundry appliance 100 is shown with the outer body 110 removed. As can be more clearly seen in FIG. 2, the drum 120 is constructed of a drum wall 124 defining an outer surface 126 and an inner surface 128 defining the receptacle 122 for the laundry items. The drum 120 is generally cylindrical in shape, with the drum wall 124 including a curved portion 123 such that receptacle 122 has a substantially circular cross section. The receptacle 122 is open for access on one end, toward the front surface 116 of the laundry appliance 100, and may include a rear base wall 125 toward the rear of the drum 120. The outer surface 126 of the drum wall 124 includes the surface of the curved portion 123, which defines the opening 117, and the surface of the rear base wall 125 which forms the back of the receptacle (*i*.*e*., the base of the cylindrical drum). The drum 120 may be mounted within the appliance body 110 in any suitable manner, such as, for example, via front and rear mounting panels 130, 140. The drum 120 is rotatable about a central axis Z via a motor 150 which is connected to a drive belt 160 on the outer surface 126 of the drum wall 124. Rotation of the drum 120 tumbles the laundry items to aid in drying (or washing) of the laundry items within the receptacle 122. The laundry appliance 100 includes additional components as required for operation of the laundry appliance, such as, but not limited to a blower assembly 170 for supplying air into and/or removing air from the receptacle 122 of the drum 120, a heater assembly (not shown) for heating the air, and a controller 180 for operating the blower assembly 170 and/or the heater assembly according to the user input. The blower and heater assemblies may be any suitable assemblies for providing heated air to the drum 120. Air is vented from the receptacle 122 of drum 120 via exhaust passages (not shown). In embodiments where the drum 120 is part of a washer, the washer may include suitable components for supplying water into and/or removing water from the receptacle 122 of the drum 120, and for heating the water according to the user input and selected laundry cycle.

Referring again to FIG. 2, an insulation composite 200 may be applied to the drum 120 to reduce the convective heat losses on the outer surface 126 of the drum wall 124. The insulation composite 200 is secured, or, in some embodiments, adhered, to the outer surface 126 of the drum wall 124. In one or more embodiments, a first insulation composite 200 is positioned on the curved portion 123 of the outer surface 126 around the cylindrical body. In further embodiments, a second insulation composite (not shown) may be adhered to the rear base wall 125 of the drum 120, positioned toward the rear wall 114 of the appliance body. Although the second insulation composite is not shown, it is contemplated that any or all surfaces of the drum 120 may include one or more insulation composites 200 thereon to reduce convective heat loss from the various surfaces of the drum 120. As such, the insulation composite 200 can cover at least a portion of the outer surface 126, including portions of the curved portion 123, the rear base wall 125, or both. The insulation composite 200 may be secured to the drum 120 by any suitable mechanism, such as, but not limited to, glue, tape, release liner, hook-and-loop fasteners, or other suitable adhesive. In other embodiments, to secure the insulation composite 200 to the drum 120, the insulation composite 200 may be sewn together at the ends, so material can wrap around the drum 120, or the insulation composite 200 can be heated to melt the fibers of the insulation composite 200 together with the drum 120. To secure the insulation composite 200 to the drum 120, the mechanism for attaching may be on at least a portion of, or all of, either the drum 120, the insulation composite 200, or both. The insulation composite 200 may be positioned on the drum wall 124 such that the drive belt 160 is positionally radially outward of the insulation composite 200 with respect to the Z-axis. In embodiments where the insulation composite 200 includes two or more pieces, as discussed below, the drive belt 160 may be positioned between pieces of insulation composite 200.

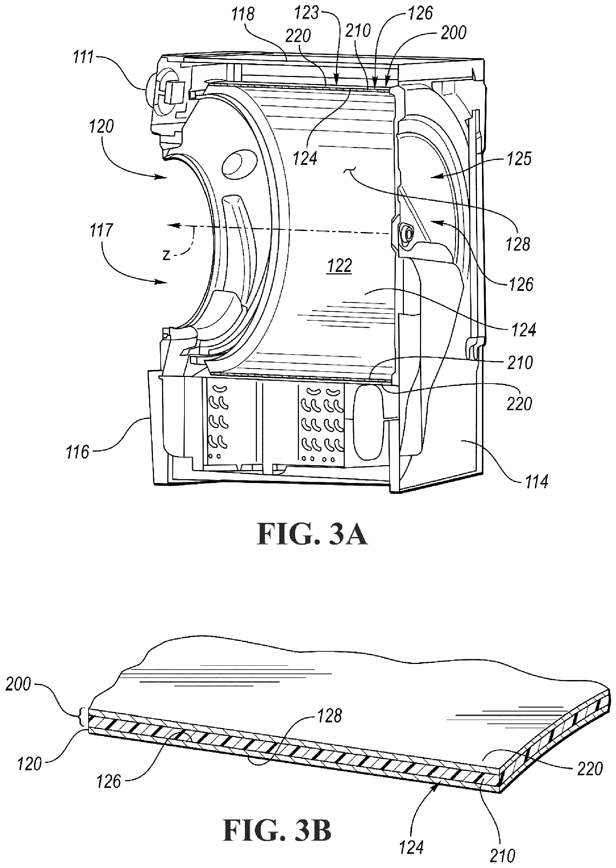

As shown in FIG. 3A and FIG. 3B, a perspective cross-section of a laundry appliance 100 taken along line A-A' to show the layers of insulation composite 200 on the drum 120, and an enlarged partial schematic view of the insulation composite 200 and drum wall 124 are shown, respectively. Although shown on the curved portion 123, the features of the insulation composite 200 also apply when secured to the rear base wall 125, and discussion of the outer surface 126 is not limited to the curved portion 123 of the drum wall 124. Notably, the outer surface 126 is defined as both the curved portion 123 and the rear base wall 125. The insulation composite 200 includes a polyester material 210 and an air barrier layer 220 on the drum 120 to prevent heat loss from air adjacent to the outer surface 126 of the drum wall 124. In one or more embodiments, the polyester material 210 has a first side positioned adjacent to and secured on the outer surface 126 of the drum wall 124, and a second side, opposite the first side, positioned adjacent to the air barrier layer 220 such that air barrier layer 220 seals exchange of air between the interior cavity of the laundry appliance 100 and the air directly exterior to the drum 120, thus reducing convective heat loss from the drum 120. Although only two layers are shown as forming the insulation composite 200, any number of layers of polyester material 210 and any number of air barrier layer 220 may be included to impart the desired reduction in heat loss from the drum 120 without compromising energy requirements of the motor because of additional weight; thus, the depicted configuration is not intended to be limiting. For example, in certain embodiments, the insulation composite 200 includes 1 to 5 polyester material layers, in other embodiments 1 to 4 layers, and in yet other embodiments, 1 to 3 polyester material layers.

The insulation composite 200 is provided to cover at least 20% of the outer surface 126 in some embodiments, 25 to 95% of the outer surface 126 in other embodiments, and 30 to 90% of the outer surface 126 in yet other embodiments. In some embodiments, the insulation composite 200 is provided to cover at least 20% of the curved portion 123 in some embodiments, 25 to 95% of the outer surface 126 in other embodiments, and 30 to 90% of the curved portion 123 in yet other embodiments. The insulation composite 200 is further provided, in certain embodiments, on the rear wall surface of the drum 120, and may cover at least 20% of the rear surface, in other embodiments 25 to 95%, and in yet other embodiments 30 to 90% of the rear base wall 125 of the drum 120. The insulation composite 200 may be included on the drum 120 in any suitable configuration or combination of on the outer surface 126 *(i.e.,* on the curved surface and/or the rear base wall) of the drum, and in any suitable number of pieces. In some embodiments, the insulation composite 200 is one unitary piece, and in other embodiments, the insulation composite 200 comprises 2 to 10 discrete components. In embodiments where the insulation composite 200 is one unitary piece on the curved surface portion of the outer surface 126, the insulation composite 200 may have a width of 125 to 145 mm, and a length of 145 to 165 mm. In some embodiments, the insulation composite 200 may be included on the drum 120 in configurations based on belt tolerance and space available as to not be worn or damaged against the drive belt.

By including the insulation composite 200 on the drum 120, the convective heat loss from the drum 120 can be reduced by at least 50% when compared with laundry drums without an insulation composite. As such, the inclusion of the insulation composite 200 can reduce heat loss from the drum 120, thus improving the efficiency of the laundry appliance 100.

Referring again to FIG. 3A and FIG. 3B, the layers of insulation composite 200 on the drum 120 are shown in detail. In certain embodiments, as shown in FIG. 3B, the polyester material 210 has a first surface located adjacent to the outer surface 126 of the drum wall 124, and a second surface adjacent to the air barrier layer 220. The polyester material 210 and the air barrier layer 220 may be attached together by any suitable mechanism, such as, but not limited to glue, tape, release liner, hook and loop fasteners, or other suitable adhesion technique. In other embodiments, the air barrier layer 220 and the polyester material 210 may be secured together mechanically by staples, sewing, baffles through the drum, or heat melting the polyester fibers to the air barrier layer 220. Furthermore, the polyester material 210 is attached to the outer surface 126 by any suitable means, including, but not limited to, glue, tape, release liner, hook-and-loop fasteners, or other suitable adhesive. In other embodiments, to secure the polyester material 210 (and, therefore, the insulation composite 200) to the drum 120, the polyester material 210 may be sewn together at the ends, so material can wrap around the drum 120, or the polyester material 210 can be heated to melt the fibers of the polyester material 210 to adhere to the outer surface 126. In yet other embodiments, the polyester material 210 may be secured to the drum 120 by baffles through the drum wall 124.

In one or more embodiments, the polyester material 210 is a fibrous substrate having a suitable density to reduce convective heat loss from the drum 120. The surface density of the polyester material 210 may be 50 to 1000 g/m² in at least one embodiment, 150 to 700 g/m² in some embodiments, 200 to 650 g/m² in other embodiments, and 250 to 600 g/m² in yet other embodiments. In at least one embodiment, the surface density of the polyester material 210 is 300 to 400 g/m². The polyester material 210 may be any suitable polyester material for reducing convective heat loss from the drum 120, including, but not limited to, a polyester felt material (e.g., needle punched polyester felt). The polyester material 210 may have any suitable thickness, and in certain embodiments, has a thickness of 1 to 5 mm, in other embodiments, 2 to 4 mm, and in yet other embodiments 3 mm. The thickness of the polyester material 210 is substantially uniform throughout the insulation composite 200, such that any variations in thickness are within 0.01 to 0.05 mm. In certain embodiments, each layer of the polyester material 210 may has a suitable thickness not to obstruct efficiency of the motor by addition of weight, and also be of sufficient weight to be secured to the drum based on the weight tolerance of the securing mechanism. Furthermore, the polyester material 210 has sufficient heat tolerance to be directly adhered on the drum 120, and has structural integrity and flexibility to be wrapped about the drum 120. In one or more embodiments the polyester material has a thermal conductivity of 0.02 to 0.06 W/(m-K), in other embodiments 0.03 to 0.055 W/(m-K), and in yet other embodiments 0.04 to 0.05 W/(m-K) (at atmospheric pressure and 25°C).

The air barrier layer 220 is positioned toward the outer body 110 of the appliance 100 when compared with the polyester material 210. As such, the polyester material 210 is sandwiched between the outer surface 126 and the air barrier layer 220. The air barrier layer 220 is substantially impermeable to air, and may be any suitable material, including, but not limited to, a metal foil (e.g., aluminum or tin), or a sheet of aluminum, steel, stainless steel, or other suitable substantially air-impermeable or non-porous layer. The air barrier layer 220 has sufficient heat tolerance (for example, in some embodiments, up to 125 to 150°F) to be attached to the polyester material 210 and be located within the cavity of body 110, and has structural integrity and flexibility to be wrapped about the drum 120. As such, the air barrier layer 220 traps air within the thickness of the polyester material 210, thus reducing the amount of heat lost via convection in the air surrounding the drum 120. The air barrier layer 220 has a thickness of 25 to 1000 µm in certain embodiments, 35 to 750 µm in other embodiments, and 40 to 500 µm in yet other embodiments. In one or more embodiments the air barrier layer 220 has a thermal conductivity of 200 to 210 W/(m-K), in other embodiments 202 to 208 W/(m-K), and in yet other embodiments 203 to 207 W/(m-K) (at atmospheric pressure and 25°C). The volumetric density of air barrier layer 220 may be 2 to 3.5 g/cm³ in some embodiments, 2.25 to 3.25 g/cm³ in other embodiments, 2.5 to 3.0 g/cm³.

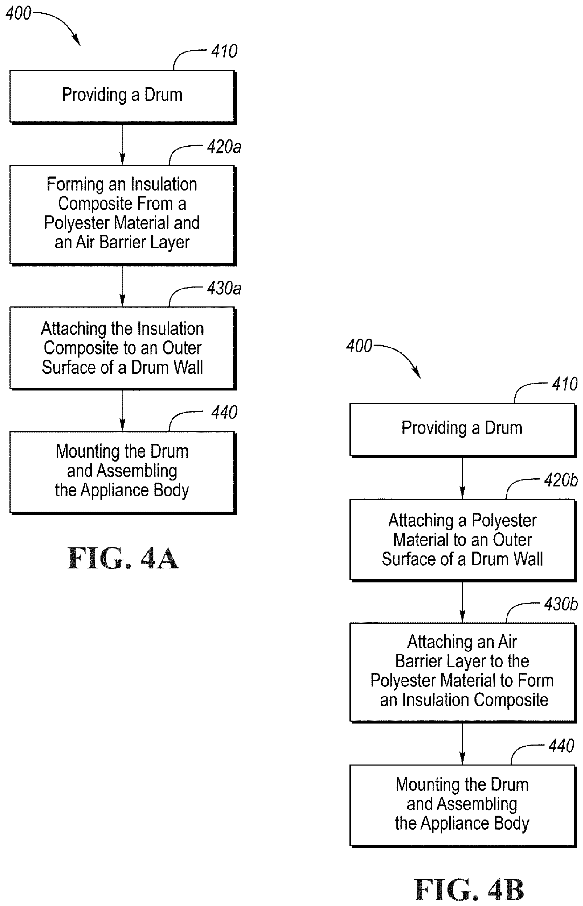

Referring to FIG. 4A, a method 400 of providing a laundry appliance having reduced convective heat loss through the drum is provided. The method includes, at step 410, providing a drum having a drum wall defining a receptacle for receiving laundry items, the drum being configured to be mounted within an appliance body of a laundry appliance, such that the receptacle is accessible via a door in the appliance body. The method further includes, at step 420a forming an insulation composite including an air barrier layer and a polyester material layer. In certain embodiments, the air barrier layer is an aluminum layer. In some embodiments, the polyester material layer is a polyester felt. The forming of the insulation composite includes adhering or securing the air barrier layer with the polyester material via, in certain embodiments, glue, tape, release liner, hook and loop fastener, mechanical fasteners (*e.g.,* staples), or melt adhesion via melting of the polyester material. The method further includes, at step 430a, securing (or adhering) the insulation composite to the outer surface of the drum to reduce convective heat loss from the drum. The attaching step may include, in some embodiments, applying a release liner, glue, tape, or corresponding hook and loop fasteners to the insulation composite and/or the drum, and thereafter rotating the drum and securing the insulation composite to the drum, via, in some embodiments, a roller to press the insulation composite against the drum. In certain embodiments, the polyester material is adhered to the outer surface of the drum wall to attach the insulation composite. In embodiments where the attaching is via a release liner, the liner may be removed as the drum rotates to continuously secure the insulation composite. In one or more embodiments, the attaching includes securing one or more insulation composite pieces to the drum. The drum may then be mounted and the appliance body assembled at step 440. As such, a laundry appliance with drum insulation is formed.

Although the method of FIG. 4A shows that the insulation composite is formed prior to attachment to the drum, the method of FIG. 4B describes an embodiment where the polyester material is first attached to the outer surface of the drum wall at step 420b. The polyester material may be attached to the drum via a releasable liner, glue, tape, melt adhesion, mechanical fasteners, or corresponding hook and loop fasteners. A first surface of the polyester material is thus attached to the outer surface of the drum wall, and may be secured by rotating the drum and pressing the polyester material onto the surface via a roller. The second surface of the polyester material, opposite from the first surface may further include glue, tape, another releasable liner, or hook and loop fasteners, configured to secure the polyester material and an air barrier layer together. At step 430b, the air barrier layer is attached to the polyester material, thus forming an insulation composite on the drum. The air barrier layer may be secured to the polyester material via the glue, tape, releasable liner, mechanical fasteners, melt adhesion or hook and loop fasteners on the second surface, or in some other embodiments, the air barrier layer may also or alternatively include glue, tape, releasable liner, mechanical fasteners, or hook and loop fasteners on an inner surface for securing to the second surface of the polyester material. The air barrier layer may be secured to the polyester material by rotating the drum and pressing the air barrier layer onto the second surface via a roller.

Furthermore, in other embodiments, not described in FIGS. 4A-4B, the drum may be mounted on mounting surfaces of the laundry appliance prior to attachment of the insulation composite, with the appliance body being assembled around the mounted drum and insulation composite thereafter.

According to one or more embodiments, a laundry appliance includes an insulation composite on the drum. The outer surface of the drum wall includes the insulation composite adhered thereon to reduce convective heat loss from the drum. The insulation composite includes a polyester material and an air barrier layer, with the polyester material reducing heat loss adjacent the outer surface of the drum, and the air barrier layer is substantially impermeable to air such that the heat remains trapped adjacent to the outer surface. The polyester material may be adhered to the drum wall, with the air barrier layer attached to the opposite surface of the polyester material from the drum wall. The polyester material may be a polyester felt, and the air barrier layer may be a metal foil or sheet (e.g., aluminum). As such, the insulation composite reduces the convective heat loss from the drum due to the properties of the insulation composite provided thereon.

Except where otherwise expressly indicated, all numerical quantities in this description and in the claims are to be understood as modified by the word "about" in describing the broader scope of this invention. The term "substantially," "generally," or "about" may be used herein and may modify a value or relative characteristic disclosed or claimed. In such instances, "substantially," "generally," or "about" may signify that the value or relative characteristic it modifies is within ± 0%, 0.1%, 0.5%, 1%, 2%, 3%, 4%, 5% or 10% of the value or relative characteristic. Practice within the numerical limits stated is generally preferred. Also, unless expressly stated to the contrary, the description of a group or class of materials by suitable or preferred for a given purpose in connection with the invention implies that mixtures of any two or more members of the group or class may be equally suitable or preferred.

While exemplary embodiments are described above, it is not intended that these embodiments describe all possible forms of the invention. Rather, the words used in the specification are words of description rather than limitation. Additionally, the features of various implementing embodiments may be combined to form further embodiments of the invention.

## Claims

1. A laundry appliance (100), wherein the laundry appliance is a dryer (100), comprising:
a cylindrical drum (120) including a drum wall (124) defining a receptacle (122) for receiving laundry items, the drum wall (124) includes a curved portion (123) and a rear wall portion (125) which define an outer surface (126) which is susceptible to heat loss;
**characterized in that** further comprises
an insulation composite (200) secured to at least a portion of the outer surface (126) to reduce the heat loss from the drum (120), the insulation composite (200) includes a polyester material (210) and an air barrier layer (220), the polyester material (210) being sandwiched between the drum wall (124) and the air barrier layer (220).

2. The laundry appliance (100) of claim 1, wherein the insulation composite (200) includes a plurality of layers of the polyester material (210) sandwiched between the drum wall (124) and the air barrier layer (220).

3. The laundry appliance (100) of any of previous claims, wherein the air barrier layer (220) is a metal foil or sheet.

4. The laundry appliance (100) of any of previous claims, wherein the polyester material (210) is a polyester felt.

5. The laundry appliance (100) of any of previous claims, wherein a thermal conductivity of the polyester material (210) is about 0.02 to 0.06 W/(m-K).

6. The laundry appliance (100) of any of previous claims, wherein the polyester material (210) has a thickness of about 1 to 5 mm, and the air barrier layer (220) has a thickness of about 25 to 1000 µm.

7. The laundry appliance (100) of any of previous claims, wherein the polyester material (210) has a surface density of about 50 to 1000 g/m².

8. The laundry appliance (100) of any of previous claims, wherein said at least a portion of the outer surface (126) is at least 20%.

9. The laundry appliance (100) of claim 1, wherein said at least a portion of the outer surface (126) is at least 20% of the curved portion (123).

10. A method of providing a laundry appliance (100), wherein the laundry appliance is a dryer (100), comprising:
providing a drum (120) having a receptacle (122) for receiving laundry items, the drum (120) being configured to be mounted within an appliance body (110);
**characterized in that** further comprises the step of
attaching a polyester material (210) to at least a portion of an outer surface (126) of the drum (120), wherein the polyester material (210) is positioned on the outer surface (126) to reduce convective heat loss from the drum, further comprising attaching an air barrier layer (220) to the polyester material (210).

11. The method of claim 10, wherein the step of attaching an air barrier layer (220) to the polyester material (210) is performed on an opposite side of the polyester material (210) from the outer surface (126)

12. The method of claim 10, wherein the step of attaching an air barrier layer (220) to the polyester material (210) is performed prior to attaching the polyester material (210) to the outer surface (126).

13. The method of claim 11 or 12, wherein the polyester material (210) is a polyester felt and the air barrier layer (220) is a metal foil or sheet.

14. The method of claim 13, wherein the polyester material (210) has a thickness of about 1 to 5 mm, and the air barrier layer (220) has a thickness of about 25 to 1000 µm.

15. The method of any of claims 10 to 14, wherein attaching the polyester material (210) to at least a portion of the outer surface (126) includes attaching the polyester material (210) to at least a portion of a curved portion (123) of the outer surface (126), at least a portion of a rear wall portion (125) of the outer surface (126), or at least a portion of both the curved portion (123) and the rear wall portion (125).

## Patentansprüche

1. Wäschereigerät (100), wobei das Wäschereigerät ein Trockner (100) ist, der Folgendes umfasst:
eine zylinderförmige Trommel (120), die eine Trommelwand (124) einschließt, die eine Aufnahme (122) zum Empfangen von Wäschereielementen definiert, wobei die Trommelwand (124) einen gekrümmten Abschnitt (123) und einen Rückwandabschnitt (125) einschließt, der eine Außenoberfläche (126) definiert, die für Wärmeverlust anfällig ist;
**dadurch gekennzeichnet, dass** er weiter Folgendes umfasst:
einen Isolierverbundstoff (200), der an mindestens einem Abschnitt der Außenoberfläche (126) befestigt ist, um den Wärmeverlust von der Trommel (120) zu verringern, wobei der Isolierverbundstoff (200) ein Polyestermaterial (210) und eine Luftbarrierelage (220) einschließt, wobei das Polyestermaterial (210) zwischen der Trommelwand (124) und der Luftbarrierelage (220) zwischengelegt ist.

2. Wäschereigerät (100) nach Anspruch 1, wobei der Isolierverbundstoff (200) eine Vielzahl von Lagen des Polyestermaterials (210) einschließt, die zwischen der Trommelwand (124) und der Luftbarrierelage (220) zwischengelegt sind.

3. Wäschereigerät (100) nach einem der vorstehenden Ansprüche, wobei die Luftbarrierelage (220) eine Metallfolie oder-bogen ist.

4. Wäschereigerät (100) nach einem der vorstehenden Ansprüche, wobei das Polyestermaterial (210) ein Polyesterfilz ist.

5. Wäschereigerät (100) nach einem der vorstehenden Ansprüche, wobei eine Wärmeleitfähigkeit des Polyestermaterials (210) etwa 0,02 bis 0,06 W/(m-K) ist.

6. Wäschereigerät (100) nach einem der vorstehenden Ansprüche, wobei das Polyestermaterial (210) eine Dicke von etwa 1 bis 5 mm aufweist und die Luftbarrierelage (220) eine Dicke von etwa 25 bis 1000 µm aufweist.

7. Wäschereigerät (100) nach einem der vorstehenden Ansprüche, wobei das Polyestermaterial (210) eine Oberflächendichte von etwa 50 bis 1000 g/m² aufweist.

8. Wäschereigerät (100) nach einem der vorstehenden Ansprüche, wobei der mindestens eine Abschnitt der Außenoberfläche (126) mindestens 20 % ist.

9. Wäschereigerät (100) nach Anspruch 1, wobei der mindestens eine Abschnitt der Außenoberfläche (126) mindestens 20 % des gekrümmten Abschnitts (123) ist.

10. Verfahren zum Bereitstellen eines Wäschereigeräts (100), wobei das Wäschereigerät ein Trockner (100) ist, umfassend:
Bereitstellen einer Trommel (120), die eine Aufnahme (122) zum Empfangen von Wäschereielementen aufweist, wobei die Trommel (120) konfiguriert ist, um innerhalb eines Gerätekörpers (110) montiert zu werden;
**dadurch gekennzeichnet, dass** er weiter den Schritt umfasst des
Anbringens eines Polyestermaterials (210) an mindestens einem Abschnitt einer Außenoberfläche (126) der Trommel (120), wobei das Polyestermaterial (210) an der Außenoberfläche (126) positioniert wird, um konvektiven Wärmeverlust von der Trommel zu verringern, weiter umfassend Anbringen einer Luftbarrierelage (220) an dem Polyestermaterial (210).

11. Verfahren nach Anspruch 10, wobei der Schritt des Anbringens einer Luftbarrierelage (220) an dem Polyestermaterial (210) an gegenüberliegenden Seiten des Polyestermaterials (210) von der Außenoberfläche (126) durchgeführt wird.

12. Verfahren nach Anspruch 10, wobei der Schritt des Anbringens einer Luftbarrierelage (220) an dem Polyestermaterial (210) vor Anbringen des Polyestermaterials (210) an der Außenoberfläche (126) durchgeführt wird.

13. Verfahren nach Anspruch 11 oder 12, wobei das Polyestermaterial (210) ein Polyesterfilz ist und die Luftbarrierelage (220) eine Metallfolie oder -bogen ist.

14. Verfahren nach Anspruch 13, wobei das Polyestermaterial (210) eine Dicke von etwa 1 bis 5 mm aufweist und die Luftbarrierelage (220) eine Dicke von etwa 25 bis 1000 µm aufweist.

15. Verfahren nach einem der Ansprüche 10 bis 14, wobei Anbringen des Polyestermaterials (210) an mindestens einem Abschnitt der Außenoberfläche (126) Anbringen des Polyestermaterials (210) an mindestens einem Abschnitt eines gekrümmten Abschnitts (123) der Außenoberfläche (126), mindestens einem Abschnitt eines Rückwandabschnitts (125) der Außenoberfläche (126) oder mindestens einem Abschnitt von sowohl dem gekrümmten Abschnitt (123) als auch dem Rückwandabschnitt (125) einschließt.

## Revendications

1. Appareil de blanchisserie (100), dans lequel l'appareil de blanchisserie est un sèche-linge (100), comprenant :
un tambour cylindrique (120) incluant une paroi de tambour (124) définissant un réceptacle (122) pour recevoir des pièces de linge, la paroi de tambour (124) inclut une partie incurvée (123) et une partie de paroi arrière (125) qui définit une surface extérieure (126) qui est sensible à la perte de chaleur ;
**caractérisé en ce qu'**il comprend en outre
un composite d'isolation (200) fixé à au moins une partie de la surface extérieure (126) pour diminuer la perte de chaleur du tambour (120), le composite d'isolation (200) inclut un matériau à base de polyester (210) et une couche formant barrière contre l'air (220), le matériau à base de polyester (210) étant pris en sandwich entre la paroi de tambour (124) et la couche formant barrière contre l'air (220).

2. Appareil de blanchisserie (100) selon la revendication 1, dans lequel le composite d'isolation (200) inclut une pluralité de couches du matériau à base de polyester (210) pris en sandwich entre la paroi de tambour (124) et la couche formant barrière contre l'air (220).

3. Appareil de blanchisserie (100) selon l'une quelconque des revendications précédentes, dans lequel la couche formant barrière contre l'air (220) est une tôle ou une feuille métallique.

4. Appareil de blanchisserie (100) selon l'une quelconque des revendications précédentes, dans lequel le matériau à base de polyester (210) est un feutre de polyester.

5. Appareil de blanchisserie (100) selon l'une quelconque des revendications précédentes, dans lequel une conductivité thermique du matériau à base de polyester (210) va d'environ 0,02 à 0,06 W/(m-K).

6. Appareil de blanchisserie (100) selon l'une quelconque des revendications précédentes, dans lequel le matériau à base de polyester (210) présente une épaisseur allant d'environ 1 à 5 mm, et la coucher formant barrière contre l'air (220) présente une épaisseur allant d'environ 25 à 1000 µm.

7. Appareil de blanchisserie (100) selon l'une quelconque des revendications précédentes, dans lequel le matériau à base de polyester (210) présente une densité de surface allant d'environ 50 à 1000 g/m².

8. Appareil de blanchisserie (100) selon l'une quelconque des revendications précédentes, dans lequel ladite au moins une partie de la surface extérieure (126) est d'au moins 20 %.

9. Appareil de blanchisserie (100) selon la revendication 1, dans lequel ladite au moins une partie de la surface extérieure (126) est d'au moins 20 % de la partie incurvée (123).

10. Procédé de fourniture d'un appareil de blanchisserie (100), dans lequel l'appareil de blanchisserie est un sèche-linge (100), comprenant :
la fourniture d'un tambour (120) présentant un réceptacle (122) pour recevoir des pièces de linge, le tambour (120) étant configuré pour être monté dans un corps d'appareil (110) ;
**caractérisé en ce qu'**il comprend en outre l'étape consistant à
fixer un matériau à base de polyester (210) à au moins une partie d'une surface extérieure (126) du tambour (120), dans lequel le matériau à base de polyester (210) est positionné sur la surface extérieure (126) pour diminuer la perte de chaleur par convection du tambour, comprenant en outre la fixation d'une couche formant barrière contre l'air (220) au matériau à base de polyester (210).

11. Procédé selon la revendication 10, dans lequel l'étape consistant à fixer une couche formant barrière contre l'air (220) du matériau à base de polyester (210) est réalisée sur un côté opposé du matériau à base de polyester (210) de la surface extérieure (126).

12. Procédé selon la revendication 10, dans lequel l'étape consistant à fixer une couche formant barrière contre l'air (220) au matériau à base de polyester (210) est réalisée avant de fixer le matériau à base de polyester (210) à la surface extérieure (126).

13. Procédé selon la revendication 11 ou 12, dans lequel le matériau à base de polyester (210) est un feutre de polyester et la couche formant barrière contre l'air (220) est une tôle ou une feuille métallique.

14. Procédé selon la revendication 13, dans lequel le matériau à base de polyester (210) présente une épaisseur allant d'environ 1 à 5 mm, et la couche formant barrière contre l'air (220) présente une épaisseur allant d'environ 25 à 1000 µm.

15. Procédé selon l'une quelconque des revendications 10 à 14, dans lequel la fixation du matériau à base de polyester (210) à au moins une partie de la surface extérieure (126) inclut la fixation du matériau à base de polyester (210) à au moins une partie d'une partie incurvée (123) de la surface extérieure (126), au moins une partie d'une partie de paroi arrière (125) de la surface extérieure (126), ou au moins une partie à la fois de la partie incurvée (123) et de la partie de paroi arrière (125).
